(19) Europäisches Patentamt European Patent Office Office européen des brevets

(11) **EP 4 657 817 A1**

(12) **EUROPEAN PATENT APPLICATION**

(43) Date of publication:
**03.12.2025 Bulletin 2025/49**

(21) Application number: 25176330.6

(22) Date of filing: **14.05.2025**

(51) International Patent Classification (IPC):
**H04L 41/16** *(2022.01)* **H04L 43/0888** *(2022.01)*
**H04W 24/06** *(2009.01)*

(52) Cooperative Patent Classification (CPC):
**H04L 43/0888; H04L 41/16; H04W 24/04;**
H04W 24/02

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.05.2024 GB 202407619**

(71) Applicant: **Vodafone Group Services Limited**
**Newbury, Berkshire RG14 2FN (GB)**

(72) Inventors:
- **MOHAMED-WAHEED, Mohamed**
  **London, W2 6BY (GB)**
- **GABER, Ayman**
  **London, W2 6BY (GB)**

(74) Representative: **Boult Wade Tennant LLP**
**Salisbury Square House**
**8 Salisbury Square**
**London EC4Y 8AP (GB)**

(54) **A COMPUTER-IMPLEMENTED METHOD AND A SYSTEM FOR PREDICTING USER THROUGHPUT IN A TELECOMMUNICATIONS NETWORK**

(57)     A computer implemented method of predicting user throughput in a telecommunications network, and a system of predicting user throughput in a telecommunications network are disclosed, as well as a method of training a multimodal machine learning model. The computer implemented method of predicting user throughput in a telecommunications network, comprises: obtaining a satellite image or an aerial image of an area; providing the satellite image or aerial image to a trained image classifier module of a trained multimodal machine learning model, wherein the trained image classifier is configured through training to recognise and categorise environmental features present in the satellite image or aerial image; obtaining recognised and categorised environmental features from the satellite image or aerial image at the output of the trained image classifier; obtaining network KPIs relating to a telecommunications network which at least partially covers the area; obtaining base station configuration data associated with at least one base station and associated with the telecommunications network, providing the network KPIs, the base station configuration data, a user throughput target location within the area, to a numerical data module of the trained multimodal machine learning model; determining, using the numerical data module, numerical data comprising: each distance between the geographical location of the user throughput target location and the geographical location of one or more serving base stations of the at least one base station; each path loss estimate, using a path loss model, between the geographical location of the user throughput target location and the geographical location of the one or more serving base stations; each bearing angle between a transmitter of the one or more serving base stations and the at least one user throughput target location; wherein each of the one or more serving base stations is a base station which is configured to serve the geographical location of the user throughput target location; inputting the numerical data into a trained numerical data feature extractor; obtaining numerical features at the output of the trained numerical data feature extractor; providing the numerical features and the environmental features to a fusion module of the trained multimodal machine learning model; fusing the numerical features and the environmental features using the fusion module to create fused features; providing the fused features as input to a trained user throughput predictor module of the trained multimodal machine learning model, wherein the trained user throughput predictor module is configured, through training, to provide user throughput predictions;

obtaining, at the output of the trained user throughput predictor module, a user throughput prediction for each of the one or more serving base stations at the user throughput target location.

FIG. 1

**Description**

This invention relates to a computer-implemented method and a system for predicting user throughput in a telecommunications network. It also relates to a method of training a multimodal machine learning model to predict user throughput in a telecommunications network.

**BACKGROUND**

User throughput is a measure of the amount of data that can be transmitted over a network to a user equipment device and is a key metric for evaluating network performance and positive user experience. Existing methods of predicting user throughput rely on statistical averaging which are susceptible to being inaccurate and incomplete as it fails to consider all of the factors that affect user throughput and may not consider dynamic changes in the network environment. Depending solely on statistical averaging can also be restricted for optimisation as it overlooks the acceptable network conditions that affect user throughput.

Probing, third-party benchmarking agencies and crowdsourcing can actively measure network performance and user throughput. However, these techniques may add extra overhead to the network resources, affecting the overall user experience. While these techniques allow network operators to assess the user experience in real-time, the effectiveness of these methods may be limited by the specific service being tested. These techniques can also be costly for network operators and do not provide a comprehensive understanding of the overall user experience.

**BRIEF SUMMARY OF THE DISCLOSURE**

Aspects and embodiments of the invention provide: a computer implemented method of predicting user throughput in a telecommunications network; A computer implemented method of training a multimodal machine learning model to predict user throughput in a telecommunications network, systems, computer program instructions, data stores, computer readable mediums.

In accordance with the present disclosure, there is provided a computer implemented method of predicting user throughput in a telecommunications network, comprising: obtaining a satellite image or an aerial image of an area; providing the satellite image or aerial image to a trained image classifier module of a trained multimodal machine learning model, wherein the trained image classifier is configured through training to recognise and categorise environmental features present in the satellite image or aerial image; obtaining recognised and categorised environmental features from the satellite image or aerial image at the output of the trained image classifier; obtaining network Key Performance Indicators (KPIs) relating to a telecommunications network which at least partially covers the area; obtaining base station configuration data associated with at least one base station and associated with the telecommunications network, providing the network KPIs, the base station configuration data, a user throughput target location within the area, to a numerical data module of the trained multimodal machine learning model; determining, using the numerical data module, numerical data comprising: the network KPIs; the user throughput target location; each distance between the geographical location of the user throughput target location and the geographical location of one or more serving base stations of the at least one base station; each path loss estimate, using a path loss model, between the geographical location of the user throughput target location and the geographical location of the one or more serving base stations; each bearing angle between a transmitter of the one or more serving base stations and the at least one user throughput target location; wherein each of the one or more serving base stations is a base station which is configured to serve the geographical location of the user throughput target location; inputting the numerical data into a trained numerical data feature extractor; obtaining numerical features at the output of the trained numerical data feature extractor; providing the numerical features and the environmental features to a fusion module of the trained multimodal machine learning model; fusing the numerical features and the environmental features using the fusion module to create fused features; providing the fused features as input to a trained user throughput predictor module of the trained multimodal machine learning model, wherein the trained user throughput predictor module is configured, through training, to provide user throughput predictions; obtaining, at the output of the trained user throughput predictor module, a user throughput prediction for each of the one or more serving base stations at the user throughput target location.

In some examples, the base station configuration data comprises, for each of the at least one base station: operating frequency of the base station, transmitted power of the base station, at least one antenna height of the base station and the geographical location of the base station.

In some examples, the fusing of the numerical features and the environmental features comprises concatenating the numerical features and the environmental features.

In some examples the KPIs comprise one or more of: call drop rate; call setup success rate; data transfer success rate; cell throughput; number of active users; cell resources utilisation; Physical Resource Block Download utilisation; average number of users per cell; Control Channel Elements Utilization.

In some examples, the network KPIs comprise one or more KPIs which indicate network load in the telecommunications network.

In some examples, the environmental features comprise one or more of: topography of the area; vegetation present in the area; buildings present in the area; bodies of water present in the area.

In some examples, the trained image classifier comprises a convolutional neural network.

In some examples, the convolutional neural network uses an AlexNet architecture.

In some examples, the telecommunications network is one of a 3G, LTE and 5G network.

In some examples, the satellite image, or alternatively, the aerial image, has linked geographical location data for the area.

In some examples, the satellite image, or alternatively, the aerial image, is a digitally zoomed image from a larger image.

In some examples, the user throughput target location is at the centre of the area.

In some examples, the path loss model comprises a Hata-Okumura model.

In some examples, the trained numerical data feature extractor comprises a feed-forward neural network.

In some examples, the trained user throughput predictor module comprises a feed-forward neural network.

In some examples, the trained multimodal machine learning model has been trained using a training set of RF drive testing data, wherein the RF drive testing data comprises user throughput measurements taken at multiple locations, wherein each user throughput measurement is recorded together with its geographical location.

In some examples, the trained multimodal machine learning model is trained using a training set of images, wherein the images are either satellite images or aerial images, wherein each image in the training set of images is linked to a corresponding user throughput measurement and the geographical location of the user throughput measurement.

In some example, each image of the training set of images are the same size.

In some examples, each of the training set of images have the same amount of digital zoom from one or more larger images.

In accordance with the present disclosure, there is provided a computer implemented method of training a multimodal machine learning model to predict user throughput in a telecommunications network, comprising: receiving a set of training images and a set of numerical training data; wherein the set of training images each comprise an image of a different area, and comprise either a set of satellite images or a set of aerial images; wherein the set of numerical data comprises, for each area: network KPIs relating to one or more telecommunications networks which at least partially covers the area; base station configuration data associated with at least one base station and associated with the telecommunications network, a geographical location of a user throughput measurement; training at least a numerical data feature extractor of a numerical data module of the multimodal machine learning model and a user throughput predictor module of the multimodal machine learning model, using the set of training images and the set of numerical training data.

In some examples, the training comprises: inputting a one of the set of training images into an image classifier of the multimodal machine learning model, the image classifier being configured to recognise and categorise environmental features present in the satellite image or aerial image; obtaining recognised and categorised environmental features from the image at the output of the image classifier; inputting the numerical training data corresponding to the image into the numerical data module of the multimodal machine learning model; determining, using the numerical data module, numerical data comprising: the network KPIs; the geographical location of the user throughput measurement; a distance between the geographical location of the user throughput measurement and the geographical location of a serving base station of the at least one base station; a path loss estimate, using a path loss model, between the geographical location of the user throughput measurement and the geographical location of the serving base station; a bearing angle between a transmitter of the serving base station and the geographical location of the user throughput measurement; wherein the serving base station is a base station which is configured to serve the geographical location of the user throughput measurement; inputting the numerical data into the numerical data feature extractor of the multimodal machine learning model; obtaining predicted numerical features at the output of the numerical data feature extractor; fusing the recognised and categorised environmental features and the predicted numerical features in a fusion module of the multimodal machine learning model to create predicted fused features; inputting the predicted fused features into the user throughput predictor module of the multimodal machine learning model; obtaining a predicted user throughput at an output of the user throughput predictor module; determining an objective function characterising an error between the predicted user throughput compared to the user throughput measurement; using an appropriate optimisation algorithm operating on the objective function, updating at least the numerical data feature extractor and the user throughput predictor module to seek to minimise the objective function.

In some examples, the user throughput measurement and its associated geographical location are part of a RF drive testing data set.

In some examples, the numerical data feature extractor comprises a feed-forward neural network, wherein the user throughput predictor module comprises a feed-forward neural network.

In some examples, the image classifier is pretrained to recognise and categorise environmental features present in the image.

In some examples, the base station configuration data comprises, for each of the at least one base station: operating frequency of the base station, transmitted power of the base station, at least one antenna height of the base station and the geographical location of the base station.

In accordance with the present disclosure, there is provided a system comprising: one or more processors; memory storing a multimodal machine learning model; wherein the trained multimodal machine learning model is for predicting user throughput in a telecommunications network, wherein the multimodal machine learning model comprises: a trained image classifier; a numerical data module; a fusion module; a user throughput predictor module; wherein the memory comprises instructions which, when executed by one or more of the processors, cause the processor(s) to: obtain a satellite image or an aerial image of an area; provide the satellite image or aerial image to the trained image classifier module of the trained multimodal machine learning model, wherein the trained image classifier is configured through training to recognise and categorise environmental features present in the satellite image or aerial image; obtain recognised and categorised environmental features from the satellite image or aerial image at the output of the trained image classifier; obtain network KPIs relating to a telecommunications network which at least partially covers the area; obtain base station configuration data associated with at least one base station and associated with the telecommunications network, provide the network KPIs, the base station configuration data, a user throughput target location within the area, to the numerical data module of the trained multimodal machine learning model; determine, using the numerical data module, numerical data comprising: the network KPIs; the user throughput target location; each distance between the geographical location of the user throughput target location and the geographical location of one or more serving base stations of the at least one base station; each path loss estimate, using a path loss model, between the geographical location of the user throughput target location and the geographical location of the one or more serving base stations; each bearing angle between a transmitter of the one or more serving base stations and the at least one user throughput target location; wherein each of the one or more serving base stations is a base station which is configured to serve the geographical location of the user throughput target location; input the numerical data into the trained numerical data feature extractor; obtain numerical features at the output of the trained numerical data feature extractor; provide the numerical features and the environmental features to the fusion module of the trained multimodal machine learning model; fuse the numerical features and the environmental features using the fusion module to create fused features; provide the fused features as input to the trained user throughput predictor module of the trained multimodal machine learning model, wherein the trained user throughput predictor module is configured, through training, to provide user throughput predictions; obtain, at the output of the trained user throughput predictor module, a user throughput prediction for each of the one or more serving base stations at the user throughput target location.

In accordance with the present disclosure, there is provided computer program instructions for using a trained multimodal machine learning model to predict user throughput in a telecommunications network. The computer program instructions, when executed by one or more processor(s), cause the processor(s) to: obtain a satellite image or an aerial image of an area; provide the satellite image or aerial image to a trained image classifier module of the trained multimodal machine learning model, wherein the trained image classifier is configured through training to recognise and categorise environmental features present in the satellite image or aerial image; obtain recognised and categorised environmental features from the satellite image or aerial image at the output of the trained image classifier; obtain network KPIs relating to a telecommunications network which at least partially covers the area; obtain base station configuration data associated with at least one base station and associated with the telecommunications network, provide the network KPIs, the base station configuration data, a user throughput target location within the area, to a numerical data module of the trained multimodal machine learning model; determine, using the numerical data module, numerical data comprising: the network KPIs; the user throughput target location; each distance between the geographical location of the user throughput target location and the geographical location of one or more serving base stations of the at least one base station; each path loss estimate, using a path loss model, between the geographical location of the user throughput target location and the geographical location of the one or more serving base stations; each bearing angle between a transmitter of the one or more serving base stations and the at least one user throughput target location; wherein each of the one or more serving base stations is a base station which is configured to serve the geographical location of the user throughput target location; input the numerical data into a trained numerical data feature extractor; obtain numerical features at the output of the trained numerical data feature extractor; provide the numerical features and the environmental features to a fusion module of the trained multimodal machine learning model; fuse the numerical features and the environmental features using the fusion module to create fused features; provide the fused features as input to a trained user throughput predictor module of the trained multimodal machine learning model, wherein the trained user throughput predictor module is configured, through training, to provide user throughput predictions; obtain, at the output of the trained user throughput predictor module, a user throughput prediction for each of the one or more serving base stations at the user throughput target location.

In accordance with the present disclosure, there is provided a computer readable medium storing user throughput predictions associated with multiple user throughput target locations .

In some examples, the user throughput predictions stored in the medium for the multiple user throughput target locations have been obtained using a multimodal machine learning model as described herein, for example using a method as described herein.

In some examples, the user throughput predictions for each different user throughput target location may be stored as an output vector output vector $O_m$ on the computer readable medium.

In some examples, each output vector output vector $O_m$ may contain one or more user throughput predictions for each user throughput target location.

In some examples, each user throughput prediction in an output vector $O_m$ may represent a user throughput prediction from a different serving base station for that user throughput target location.

In accordance with the present disclosure, there is provided a data store comprising a trained multimodal machine learning model according to examples described herein which can be used to perform methods described herein.

In accordance with the present disclosure, there is provided a data store comprising a multimodal machine learning model according to examples described herein, which can be trained, for example, according to methods described herein.

In accordance with the present disclosure, there is provided a system for training a multimodal machine learning model to predict user throughput in a telecommunications network. The system comprises: one or more processors; memory storing a multimodal machine learning model; wherein the multimodal machine learning model is for predicting user throughput in a telecommunications network, wherein the multimodal machine learning model comprises: an image classifier; a numerical data module; a fusion module ; a user throughput predictor module. The memory comprises instructions which, when executed by one or more of the processors, cause the processor(s) to: receive a set of training images and a set of numerical training data; wherein the set of training images each comprise an image of a different area, and comprise either a set of satellite images or a set of aerial images; wherein the set of numerical data comprises, for each area: network KPIs relating to one or more telecommunications networks which at least partially covers the area; base station configuration data associated with at least one base station and associated with the telecommunications network, a geographical location of a user throughput measurement. The instructions which, when executed by one or more of the processors, further cause the processor(s) to: train at least a numerical data feature extractor of a numerical data module of the multimodal machine learning model 100 and a user throughput predictor module of the multimodal machine learning model, using the set of training images and the set of numerical training data.

In some examples, the training of the multimodal machine learning model in the system can comprise: inputting a one of the set of training images into an image classifier of the multimodal machine learning model, the image classifier being configured to recognise and categorise environmental features present in the satellite image or aerial image. The training further can comprise: obtaining recognised and categorised environmental features from the image at the output of the image classifier; inputting the numerical training data corresponding to the image into the numerical data module of the multimodal machine learning model; determining, using the numerical data module, numerical data comprising: the network KPIs; the geographical location of the user throughput measurement; a distance between the geographical location of the user throughput measurement and the geographical location of a serving base station 320 of the at least one base station; a path loss estimate, using a path loss model, between the geographical location of the user throughput measurement and the geographical location of the serving base station; a bearing angle between a transmitter of the serving base station and the geographical location of the user throughput measurement. The serving base station is a base station which is configured to serve the geographical location of the user throughput measurement. The training can further comprise inputting the numerical data into a numerical data feature extractor of the multimodal machine learning model; obtaining predicted numerical features at the output of the numerical data feature extractor; fusing the recognised and categorised environmental features and the predicted numerical features in a fusion module of the multimodal machine learning model to create predicted fused features. The training can further comprise: inputting the predicted fused features into a user throughput predictor module of the multimodal machine learning model; obtaining a predicted user throughput at an output of the user throughput predictor module; determining an objective function characterising an error between the predicted user throughput 181 compared to the user throughput measurement; using an appropriate optimisation algorithm operating on the objective function, updating at least the numerical data feature extractor 114 and the user throughput predictor module to seek to minimise the objective function.

In accordance with the present disclosure, there is provided computer program instructions for training a multimodal machine learning model to predict user throughput in a telecommunications network. The computer program instructions, when executed by one or more processor(s), cause the processor(s) to: receive a set of training images and a set of numerical training data, the set of training images each comprise an image of a different area, and comprise either a set of satellite images or a set of aerial images. The set of numerical data comprises, for each area: network KPIs relating to one or more telecommunications networks which at least partially covers the area; base station configuration data associated with at least one base station and associated with the telecommunications network; a geographical location of a user throughput measurement. The computer program instructions, when executed by one or more processor(s), further cause the processor(s) to train at least a numerical data feature extractor of a numerical data module of the multimodal machine learning model and a user throughput predictor module 140 of the multimodal machine learning model, using the set of training images and the set of numerical training data.

In some examples, the training comprises: inputting a one of the set of training images into an image classifier of the multimodal machine learning model, the image classifier being configured to recognise and categorise environmental features present in the satellite image or aerial image; obtaining recognised and categorised environmental features from the image at the output of the image classifier; inputting the numerical training data corresponding to the image into the numerical data module of the multimodal machine learning model; determining, using the numerical data module, numerical data comprising: the network KPIs; the geographical location of the user throughput measurement; a distance between the geographical location of the user throughput measurement and the geographical location of a serving base station of the at least one base station; a path loss estimate, using a path loss model, between the geographical location of the user throughput measurement and the geographical location of the serving base station; a bearing angle between a transmitter of the serving base station and the geographical location of the user throughput measurement. The serving base station is a base station which is configured to serve the geographical location of the user throughput measurement. The training further comprises: inputting the numerical data into a numerical data feature extractor of the multimodal machine learning model; obtaining predicted numerical features at the output of the numerical data feature extractor. The training further comprises: fusing the recognised and categorised environmental features and the predicted numerical features in a fusion module of the multimodal machine learning model to create predicted fused features; inputting the predicted fused features into a user throughput predictor module 140 of the multimodal machine learning model; obtaining a predicted user throughput at an output of the user throughput predictor module. The training further comprises determining an objective function characterising an error between the predicted user throughput compared to the associated user throughput measurement; using an appropriate optimisation algorithm operating on the objective function, updating at least the numerical data feature extractor and the throughput predictor module to seek to minimise the objective function. For example gradient descent can be used to seek to minimise the objective function or any other appropriate optimisation algorithm.

The following numbered clauses provide further illustrative examples.

1. A computer implemented method of predicting user throughput in a telecommunications network, comprising:

obtaining a satellite image or an aerial image of an area;
providing the satellite image or aerial image to a trained image classifier module of a trained multimodal machine learning model, wherein the trained image classifier is configured through training to recognise and categorise environmental features present in the satellite image or aerial image;
obtaining recognised and categorised environmental features from the satellite image or aerial image at the output of the trained image classifier;
obtaining network Key Performance Indicators (KPIs) relating to a telecommunications network which at least partially covers the area;
obtaining base station configuration data associated with at least one base station and associated with the telecommunications network,
providing the network KPIs, the base station configuration data, a user throughput target location within the area, to a numerical data module of the trained multimodal machine learning model;
determining, using the numerical data module, numerical data comprising: the network KPIs; the user throughput target location; each distance between the geographical location of the user throughput target location and the geographical location of one or more serving base stations of the at least one base station; each path loss estimate, using a path loss model, between the geographical location of the user throughput target location and the geographical location of the one or more serving base stations; each bearing angle between a transmitter of the one or more serving base stations and the at least one user throughput target location;
wherein each of the one or more serving base stations is a base station which is configured to serve the geographical location of the user throughput target location;
inputting the numerical data into a trained numerical data feature extractor;
obtaining numerical features at the output of the trained numerical data feature extractor;
providing the numerical features and the environmental features to a fusion module of the trained multimodal machine learning model;
fusing the numerical features and the environmental features using the fusion module to create fused features;
providing the fused features as input to a trained user throughput predictor module of the trained multimodal machine learning model, wherein the trained user throughput predictor module is configured, through training, to provide user throughput predictions;
obtaining, at the output of the trained user throughput predictor module, a user throughput prediction for each of the one or more serving base stations at the user throughput target location.

2. A computer implemented method as defined in clause 1, wherein the base station configuration data comprises, for each of the at least one base station: operating frequency of the base station, transmitted power of the base station, at least one antenna height of the base station and the geographical location of the base station.

3. A computer implemented method as defined in any preceding clause, wherein the fusing of the numerical features and the environmental features comprises concatenating the numerical features and the environmental features.

4. A computer implemented method as defined in any preceding clause, wherein the KPIs comprise one or more of:

    call drop rate;
    call setup success rate;
    data transfer success rate;
    cell throughput;
    number of active users;
    cell resources utilisation;
    Physical Resource Block Download utilisation;
    average number of users per cell;
    Control Channel Elements Utilization.

5. A computer implemented method as defined in any preceding clause, wherein the network KPIs comprise one or more KPIs which indicate network load in the telecommunications network.

6. A computer implemented method as defined in any preceding clause, wherein the environmental features comprise one or more of:

    topography of the area;
    vegetation present in the area;
    buildings present in the area;
    bodies of water present in the area.

7. A computer implemented method as defined in any preceding clause, wherein the trained image classifier comprises a convolutional neural network.

8. A computer implemented method as defined in any preceding clause, wherein the telecommunications network is one of a 3G, LTE and 5G network.

9. A computer implemented method as defined in any preceding clause, wherein the satellite image, or alternatively, the aerial image, has linked geographical location data for the area.

10. A computer implemented method as defined in any preceding clause, wherein the satellite image, or alternatively, the aerial image, is a digitally zoomed image from a larger image.

11. A computer implemented method as defined in any preceding clause, wherein the user throughput target location is at the centre of the area.

12. A computer implemented method as defined in any preceding clause, wherein the path loss model comprises a Hata-Okumura model.

13. A computer implemented method as defined in any preceding clause, wherein the trained numerical data feature extractor comprises a feed-forward neural network.

14. A computer implemented method as defined in any preceding clause, wherein the trained user throughput predictor module comprises a feed-forward neural network.

15. A computer implemented method as defined in any preceding clause, wherein the trained multimodal machine learning model has been trained using a training set of **RF** drive testing data, wherein the **RF** drive testing data comprises user throughput measurements taken at multiple locations, wherein each user throughput measurement is recorded together with its geographical location.

16. A computer implemented method as defined in clause 15, wherein the trained multimodal machine learning model is trained using a training set of images, wherein the images are either satellite images or aerial images, wherein each image in the training set of images is linked to a corresponding user throughput measurement and the geographical location of the user throughput measurement.

17. A computer implemented method as defined in clause 15 or 16, wherein each image of the training set of images are the same size.

18. A computer implemented method as defined in any one of clauses 15, 16 and 17, wherein each of the training set of images have the same amount of digital zoom from one or more larger images.

19. A computer implemented method of training a multimodal machine learning model to predict user throughput in a telecommunications network, comprising:

receiving a set of training images and a set of numerical training data;
wherein the set of training images each comprise an image of a different area, and comprise either a set of satellite images or a set of aerial images;
wherein the set of numerical data comprises, for each area: network KPIs relating to one or more telecommunications networks which at least partially covers the area; base station configuration data associated with at least one base station and associated with the telecommunications network, a geographical location of a user throughput measurement;
training at least a numerical data feature extractor of a numerical data module of the multimodal machine learning model and a user throughput predictor module of the multimodal machine learning model, using the set of training images and the set of numerical training data.

20. A computer implemented method of training a multimodal machine learning model as defined in clause 19, wherein the training comprises:

inputting a one of the set of training images into an image classifier of the multimodal machine learning model, the image classifier being configured to recognise and categorise environmental features present in the satellite image or aerial image;
obtaining recognised and categorised environmental features from the image at the output of the image classifier;
inputting the numerical training data corresponding to the image into the numerical data module of the multimodal machine learning model;
determining, using the numerical data module, numerical data comprising: the network KPIs; the geographical location of the user throughput measurement; a distance between the geographical location of the user throughput measurement and the geographical location of a serving base station of the at least one base station; a path loss estimate, using a path loss model, between the geographical location of the user throughput measurement and the geographical location of the serving base station; a bearing angle between a transmitter of the serving base station and the geographical location of the user throughput measurement;
wherein the serving base station is a base station which is configured to serve the geographical location of the user throughput measurement;
inputting the numerical data into the numerical data feature extractor of the multimodal machine learning model;
obtaining predicted numerical features at the output of the numerical data feature extractor;
fusing the recognised and categorised environmental features and the predicted numerical features in a fusion module of the multimodal machine learning model to create predicted fused features;
inputting the predicted fused features into the user throughput predictor module of the multimodal machine learning model;
obtaining a predicted user throughput at an output of the user throughput predictor module;
determining an objective function characterising an error between the predicted user throughput compared to the user throughput measurement;
using an appropriate optimisation algorithm operating on the objective function, updating at least the numerical data feature extractor and the user throughput predictor module to seek to minimise the objective function.

21. A computer implemented method of training a multimodal machine learning model as defined in clause 19 or 20, wherein the user throughput measurement and its associated geographical location are part of a RF drive testing data set.

22. A computer implemented method of training a multimodal machine learning model as defined in any of clauses 19 to 21, wherein the numerical data feature extractor comprises a feed-forward neural network, wherein the user throughput predictor module comprises a feed-forward neural network.

23. A computer implemented method of training a multimodal machine learning model as defined in any of clauses 19 to 22, wherein the image classifier is pretrained to recognise and categorise environmental features present in the image.

24. A computer implemented method of training a multimodal machine learning model as defined in any of clauses 19 to 23, wherein the base station configuration data comprises, for each of the at least one base station: operating frequency of the base station, transmitted power of the base station, at least one antenna height of the base station and the geographical location of the base station.

25. A system comprising:

    one or more processors;
    memory storing a multimodal machine learning model;
    wherein the trained multimodal machine learning model is for predicting user throughput in a telecommunications network, wherein the multimodal machine learning model comprises:

        a trained image classifier;
        a numerical data module;
        a fusion module;
        a user throughput predictor module;
        wherein the memory comprises instructions which, when executed by one or more of the processors, cause the processor(s) to:

            obtain a satellite image or an aerial image of an area;
            provide the satellite image or aerial image to the trained image classifier module of the trained multimodal machine learning model, wherein the trained image classifier is configured through training to recognise and categorise environmental features present in the satellite image or aerial image;
            obtain recognised and categorised environmental features from the satellite image or aerial image at the output of the trained image classifier;
            obtain network KPIs relating to a telecommunications network which at least partially covers the area;
            obtain base station configuration data associated with at least one base station and associated with the telecommunications network,
            provide the network KPIs, the base station configuration data, a user throughput target location within the area, to the numerical data module of the trained multimodal machine learning model;
            determine, using the numerical data module, numerical data comprising: the network KPIs; the user throughput target location; each distance between the geographical location of the user throughput target location and the geographical location of one or more serving base stations of the at least one base station; each path loss estimate, using a path loss model, between the geographical location of the user throughput target location and the geographical location of the one or more serving base stations; each bearing angle between a transmitter of the one or more serving base stations and the at least one user throughput target location;
            wherein each of the one or more serving base stations is a base station which is configured to serve the geographical location of the user throughput target location;
            input the numerical data into the trained numerical data feature extractor;
            obtain numerical features at the output of the trained numerical data feature extractor;
            provide the numerical features and the environmental features to the fusion module of the trained multimodal machine learning model;
            fuse the numerical features and the environmental features using the fusion module to create fused features;
            provide the fused features as input to the trained user throughput predictor module of the trained multimodal machine learning model, wherein the trained user throughput predictor module is configured, through training, to provide user throughput predictions;

obtain, at the output of the trained user throughput predictor module, a user throughput prediction for each of the one or more serving base stations at the user throughput target location.

## BRIEF DESCRIPTION OF THE DRAWINGS

Embodiments of the invention are further described hereinafter regarding the accompanying drawings, in which:

Figure 1 shows a schematic of a multimodal machine learning model according to examples disclosed herein;

Figure 2 shows a computer-implemented method of predicting user throughput in a telecommunications network according to examples disclosed herein;

Figure 3 shows a schematic of an example user throughput target location and base stations located nearby according to examples described herein;

Figure 4 shows a numerical data module according to examples described herein;

Figure 5 shows examples of satellite or aerial images according to examples disclosed herein;

Figure 6 shows an example trained user throughput predictor module comprising a feedforward neural network according to examples disclosed herein;

Figure 7 shows an example map showing locations at which user throughput measurements have been made according to examples described herein;

Figure 8 shows a schematic of a multimodal machine learning model in a training mode according to examples disclosed herein;

Figure 9 shows a method of training a multimodal machine learning model according to examples disclosed herein;

Figure 10 shows part of a method of training a multimodal machine learning model according to examples disclosed herein;

Figure 11 shows a system for predicting user throughput in a telecommunications network according to examples disclosed herein.

## DETAILED DESCRIPTION

Accurately predicting user throughput in telecommunications networks is becoming increasingly essential as demand continues to grow. There is a need for more sophisticated and accurate modelling techniques to ensure optimal network resource utilisation, in order to provide a positive user experience by improving user throughput throughout the coverage area for a telecommunications network. The ability to predict the throughput in different areas and under different conditions allows network operators to identify bottlenecks in the network, optimise the placement of base stations, adjust the configuration of existing base stations and allocate network resources more effectively. Additionally, being able to predict user throughput accurately and optimising user throughput can allow network operators to design new services leveraging the improved knowledge of user throughput prediction.

User throughput is a measure of the amount of data that can be transmitted over a network to a user equipment device over a period of time. For example a common unit of user throughput is the number of megabits per second (Mbps) successfully received at the user equipment device.

There are three main contributors when modelling user throughput in telecommunications networks, which are: network loads, scheduling and radio conditions. A possible equation to model the three main contributors to user throughput in telecommunications networks is the following equation:

$$\text{User Throughput} = f \text{ (Scheduling, Network Loads, Radio Conditions)}$$

where "network loads" refers to the traffic load and congestion on the network, "scheduling" refers to the allocation of radio resources to users and "radio conditions" refers to the quality and characteristics of the wireless channel, which includes qualities such as the received signal power, interference, noise and "modulation and coding scheme" (MSC).

User throughput can therefore be modelled as a complex non-linear function that depends on complex and dynamic conditions, which can be variable depending on locations in which user throughput is to be predicted.

According to examples disclosed herein, machine learning techniques can be used to model this function. According to examples disclosed herein, network Key Performance Indicators (KPIs), along with base station data (also known as cell configuration data) and satellite images or aerial images, can be used along with labelled user throughput measurements and their associated locations, to train a multimodal machine learning model using supervised machine learning techniques to learn the non-linear function and to predict user throughput at a particular geographical location, given a satellite image or aerial image of the area surrounding the geographical location and the network KPIs and base station data associated with that geographical location (also known as geolocation).

According to examples disclosed herein, the multimodal machine learning model can comprise a multimodal deep learning model. For example where the machine learning model comprises one or more neural networks, it can be referred to as a multimodal deep learning model.

Advantageously, the multimodal machine learning model extracts environmental features from the satellite images or aerial images, which is an excellent technique for extracting features relating to the radio conditions of the environment. In particular, radio interference is heavily influenced by environmental characteristics, such as buildings, vegetation, and terrain, which can affect the propagation of radio signals and the level of interference. A multimodal machine learning model, which can extract different environmental features using satellite images or aerial images, and therefore can extract and identify patterns and changes in radio conditions by using the associated labelled user throughput measurements in corresponding geographical areas using the satellite images or aerial images.

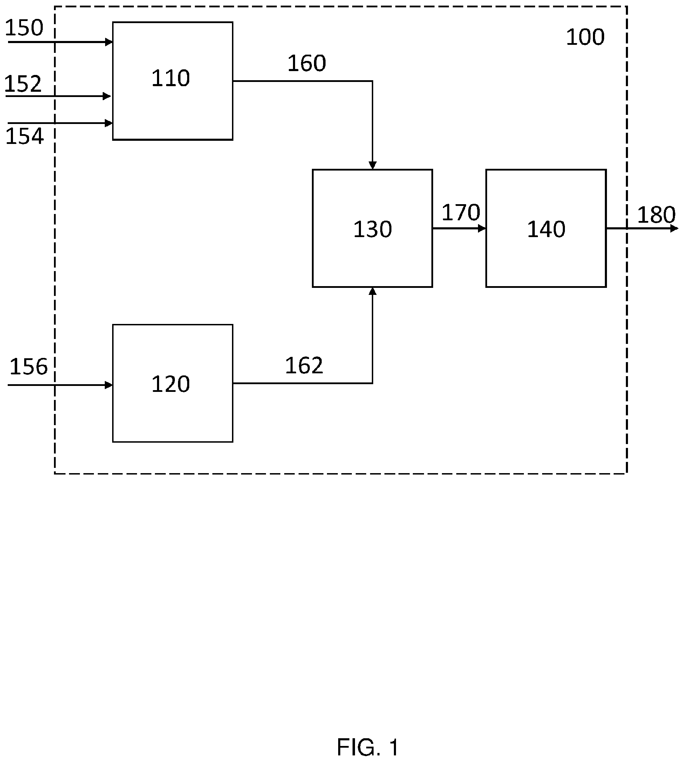

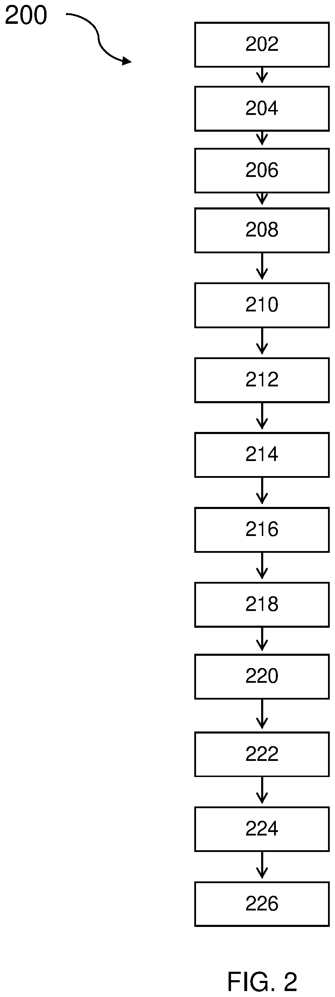

Figure 1 shows an example schematic of a multimodal machine learning model 100 according to examples disclosed herein, and Figure 2 shows a computer-implemented method of predicting user throughput in a telecommunications network, by using the multimodal machine learning model 100.

As shown in Figure 1, the multimodal machine learning model 100 comprises: a numerical data module 110, a trained image classifier 120, a fusion module 130, a trained user throughput predictor module 140.

A computer-implemented method 200 of predicting user throughput in a telecommunications network, using the multimodal machine learning model 100 according to examples disclosed herein, will now be described with reference to Figure 2 in combination with Figure 1.

The method 200 comprises: obtaining 202, a satellite image 156 or an aerial image 156 of an area and providing 204 the satellite image 156 or aerial image 156 to the trained image classifier 120 module of the trained multimodal machine learning model 100.

The trained image classifier 120 is configured through training to recognise and categorise environmental features present in the satellite image 156 or aerial image 156. According to examples disclosed herein, "environmental" features described herein refer to both natural and man-made features of the environment shown by satellite image 156 or aerial image 156.

The method 200 comprises: obtaining 206 recognised and categorised environmental features 162 from the satellite image 156 or aerial image 156 at the output of the trained image classifier 120.

Method 200 additionally comprises: obtaining 208 network KPIs 150 relating to a telecommunications network which at least partially covers the area. The area is the same area covered by the satellite image 156 or aerial image 156.

The method 200 further comprises obtaining 210 base station configuration data 152 associated with at least one base station and associated with the telecommunications network.

The method 200 additionally comprises providing 212 the network KPIs 150, the base station configuration data 152, a user throughput target location 154 within the area, to the numerical data module 110 of the trained multimodal machine learning model 100. The method can in some examples comprise the additional step of obtaining the user throughput target location 154.

The method 200 comprises determining 214, using the numerical data module 110, numerical data. The numerical data comprises: each distance between the geographical location of the user throughput target location 154 and the geographical location of one or more serving base stations of the at least one base station; each path loss estimate, using a path loss model, between the geographical location of the user throughput target location 154 and the geographical location of the one or more serving base stations; each bearing angle between a transmitter of the one or more serving base stations and the at least one user throughput target location 154. Each of the one or more serving base stations is a base station which is configured to serve the geographical location of the user throughput target location 154. The numerical data also comprises the network KPIs 150 and the user throughput target location 154.

It is to be understood that depending on the user throughput target location 154, a different number of base stations may be able to serve the user throughput target location 154, and the specific base station which is used to establish a communication link to enable a channel of communication may depend on several factors including the scheduling and the live conditions of the network. For example, the closest base station to the user throughput target location 154 may not be the one that is actually used to establish a communication link due to traffic on that particular base station, or due to the base station being shut down for maintenance, etc.. The multimodal machine learning model 100 is therefore arranged to determine a user throughput prediction for all possible base stations that could serve that particular user throughput target location 154. Each base station has a known coverage area, where user equipment in that area could potentially be connected to that particular base station. In order to satisfy network requirements and the number of users in a particular area, multiple base stations may have overlapping areas.

The method 200 further comprises inputting 216 the numerical data into a trained numerical data feature extractor and obtaining 218 numerical features 160 at the output of the trained numerical data feature extractor.

The method 200 further comprises providing 220 the numerical features 160 and the environmental features 162 to a fusion module 130 of the trained multimodal machine learning model 100, and fusing 222 the numerical features 160 and the environmental features 162 using the fusion module 130 to create fused features 170.

The method 200 then comprises providing 224 these fused features 170 as input to a trained user throughput predictor module 140 of the trained multimodal machine learning model 100. The trained user throughput predictor module 140 is configured, through training, to provide user throughput predictions.

The method 200 comprises obtaining 226, at the output of the trained user throughput predictor module 140, a user throughput prediction 180 for each of the one or more serving base stations at the user throughput target location.

Example method 200 described herein and shown in Figures 1 and 2 therefore provides user throughput predictions for a user throughput target location 154. The user throughput predictions for the user throughput target location 154 can then be used to optimise or improve the user throughput at that target location, and other user throughput target locations determined by the method 200 in subsequent running of the method 200. For example, it may be determined that the user throughput predictions do not meet a necessary threshold of a low latency, high-performance network for a positive user experience, and in response to the predictions being below the threshold, network resources may be allocated to the area where the user throughput prediction is located, and/or a recommendation for a further base station to be installed which provides service to that user throughput target location. Other actions may be taken to improve the user throughput based on the predictions.

In the example method 200 described with reference to Figures 1 and 2, user throughput predictions were provided for one user throughput target location 154 in the area. In other examples, multiple user throughput target locations 154 in the area may be used to obtain user throughput predictions.

According to examples described herein, the base station configuration data 152 comprises, for each of the at least one base station: operating frequency of the base station, transmitted power of the base station, at least one antenna (for example a transmitter) height of the base station and the geographical location of the base station. The base station configuration data 152 can also be referred to as cell configuration data.

The base station configuration data 152, which contains cell specific parameters and configurations, can be obtained from resources such as planning tool service providers which engineers used to plan and optimise the network. Planning and optimising the network typically involves allocating new base stations to achieve required throughput, coverage and customer experience while optimising the network parameters for efficiency.

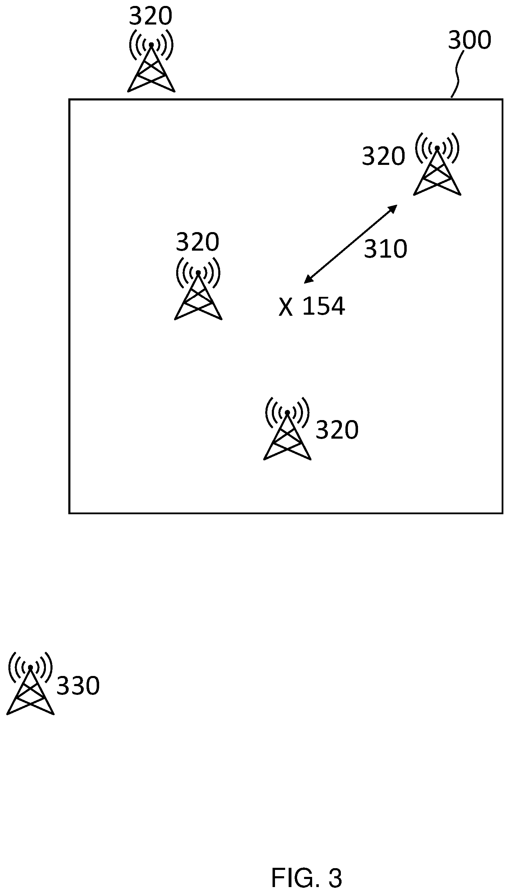

Figure 3 shows a schematic of an example user throughput target location 154 in the area 300 provided in the satellite image 156 or aerial image 156 and base stations 320, 330 located nearby according to examples described herein. A distance 310 between the user throughput target location 154 and one of the serving base stations 320 is also shown, which may also be the distance used to calculate path loss, and may also represent the bearing angle between a transmitter of the serving base station 320 and the user throughput target location 154. The bearing angle may be taken from the serving base station 320 or the user throughput target location 154.

As shown in Figure 3, the user throughput target location 154 is represented by an "X" and is located at the centre of area 300. The base station configuration data can comprise data for one or more base stations 320, 330, and in some examples can include data for all of the base stations used by the telecommunications network.

As shown in Figure 1 and Figure 2 and described herein, the method 200 uses the base station configuration data 152 to calculate numerical data. The numerical data calculates significant features that influence the output of the model 100 and involves calculating features relating to base stations that serve the user throughput target location 154. Figure 3 shows multiple serving base stations 320 and also shows a base station 330 which is not a serving base station of the user throughput target location 154.

The geographical area which a base station serves is known from data (in some examples it can be in the base station configuration data 152) used to plan and operate the network and so this can be compared to the user throughput target location 154 to know which base stations are serving base stations 320. As shown in Figure 3, base station 330 is too far away from user throughput target location 154 for it to be within its geographical area that it serves. As described herein, to meet network requirements, base stations can have overlapping areas of coverage and so in the example shown in Figure 3, there are multiple base stations 320 which serve the user throughput target location 154.

The box 300 represents the area which is covered by the satellite image 156 or aerial image 156 as described herein. According to examples described herein, and as shown in Figure 3, serving base stations 320 which are outside of the area 300 are used to calculate the numerical data. In other examples, the numerical data calculated is limited to the serving base stations 320 which are inside the area 300.

As described herein and shown in Figures 1 and 2, method 200 comprises obtaining network KPIs 150 and providing them to the numerical data module 110. The network KPIs 150 can be obtained from data collected by an operations support system of the telecommunications network. Network KPIs 150 are essential metrics for evaluating a network's performance and ensuring high-quality service delivery. Network KPIs are critical to understanding how the network is performing, identifying potential issues and optimising the network performance. Network KPIs 150 represent live conditions of the network and can be used to identify areas of the network which are underperforming and also other problems such as network load affecting user throughput. Network KPIs 150 typically are updated over a particular time period such as a day, a week or in some cases, months. As network KPIs150 are already recorded for the purpose of network optimisation and problem-solving, the multimodal learning model 100 according to examples described herein can advantageously utilise the network KPIs 150 without further adding to network load.

The network KPIs 150 comprise one or more of: call drop rate; call setup success rate; data transfer success rate; cell throughput; number of active users; cell resources utilisation; Physical Resource Block Download (PRB DL) utilisation; average number of users per cell; Control Channel Elements (CCE) Utilization.

According to examples disclosed herein, the network KPIs 150 comprise one or more KPIs which indicate network load in the telecommunications network. For example, network load can be measured by modelling serving cell utilisation and average users per cell. Serving cell utilisation calculates the percentage of radio resources used for data transmission over a given period, while average users per cell estimates the average number of user connected to a given cell at any given time. Serving Cell Utilisation can be defined as:

$$\text{Serving cell Utilisation} = \sum_{i=1}^{n} T_i$$

where $T_i$ is the amount of time that the radio resources in a given cell were used for data transmission during a given period, and $T_{total}$ is the total amount of time in the same period. High serving cell utilisation can indicate high network load and potential congestion, while low utilisation may suggest underutilisation of network resources. The total time can usually be an hour, a day or a week. The average number of users per cell in a given time interval is the mean number of users that are connected to a cell during that interval. This metric is commonly used in the telecommunications industry to asses network performance and capacity, and can provide insights into possible network congestion or underutilisation.

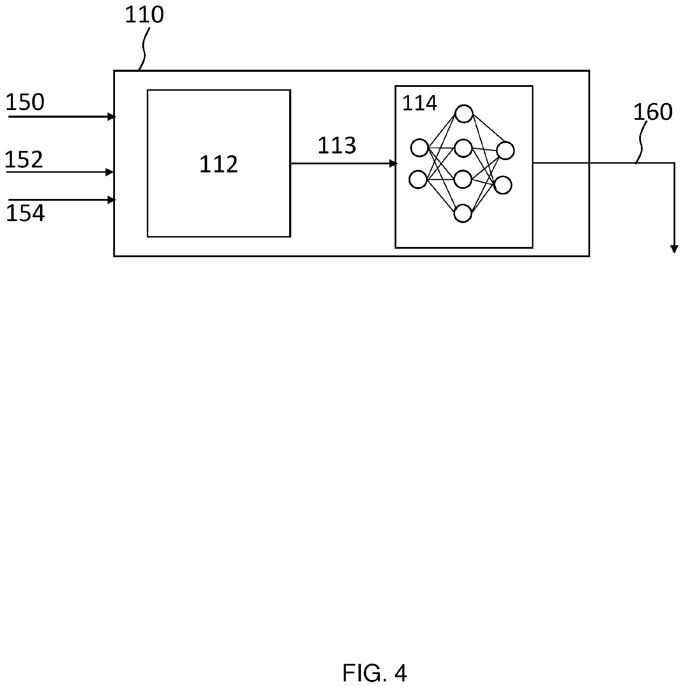

Figure 4 shows a numerical data module 110 according to examples described herein.

As described herein, the method 200 comprises providing the network KPIs 150, the base station configuration data 152 and a user throughput target location 154 to the numerical data module 110.

As shown in Figure 4, the numerical data module 110 comprises a numerical data calculator 112 and the trained numerical data feature extractor 114.

The numerical data 113 calculated is predetermined as being significant features that influence the user throughput prediction. In addition to this, complex patterns and relationships that may not be obvious from the numerical data 113 calculated can be extracted from the numerical data 113 by passing it through the trained numerical data feature extractor 114, which is able to extract these complex patterns and relationships utilising self-learned features which are extracted automatically using machine learning algorithms.

As described herein, the numerical data 113 comprises: each distance between the geographical location of the user throughput target location 154 and the geographical location of one or more serving base stations 320 of the at least one base station; each path loss estimate, using a path loss model, between the geographical location of the user throughput target location 154 and the geographical location of the one or more serving base stations 320; each bearing angle between a transmitter of the one or more serving base stations 320 and the at least one user throughput target location 154.

The distance between the geographical location of the user throughput target location 154 and the geographical location of a serving base station 320 is a critical factor in path loss calculation. This distance is necessary to accurately predict radio conditions and their impact on user throughput.

Calculating a path loss ensures accurate estimation of radio conditions, and although it is only an estimation, it will guide the model towards a more precise convergence. In some examples, the path loss model comprises a Hata-Okumura model. The Hata-Okumara model can be used for predicting the path loss in urban, suburban and rural environments for telecommunications networks. The parameters put into this model include the frequency of communication, the distance between the transmitter and receiver, the base station antenna (for example a transmitter) height and the mobile station antenna height which is the height of the receiving device. Depending on whether the path loss for calculating is in a urban area, suburban area or a rural area a different correction factor is applied.

Calculating the bearing angle between a transmitter (for example an antenna) of a serving base station 320 and the user throughput target location 154 accounts for the directional aspect of signal transmission. This feature provides information on the azimuth direction of the receiver in relation to the transmitter which allows capturing of the directional properties of the signal transmission.

The numerical data 113 can comprise the network KPIs 150 and the user throughput target location 154 as described in method 200 where it is passed to the trained numerical data feature extractor 114. Alternatively the network KPIs 150 and the user throughput target location 154 can be provided as separate inputs to the trained numerical data feature extractor 114.

The trained numerical data feature extractor 114 can comprise a feedforward neural network. In other examples the trained numerical data feature extractor 114 can comprise other machine learning algorithms such as other neural network architectures.

As shown in Figures 1 and 2, method 200 comprises inputting the numerical features 160 and the environmental features 162 into the fusion module 130. Model 100 is a multimodal model 100, because it combines features from two different modalities, namely numerical data (the numerical features 160) and image data (environmental features 162). According to examples disclosed herein, the numerical features 160 and the environmental features 162 are fused by concatenating them, however other methods of fusing are envisaged, such as addition, averaging, ensemble, weighted sum, attention mechanisms, bilinear pooling, co-attention mechanisms, graph-based methods. According to examples disclosed herein, the model 100 adopts a late fusion strategy. By fusing the structured numerical data with unstructured data from images, KPIs and other numerical features related to network load can be fused with image data related to geographical locations and features which can lead to a better understanding and optimising of the model 100 to predict user throughput and can enhance the accuracy of capturing radio conditions predicting user throughput. The image modality (environmental features 162) captures the visual characteristics of the environment and the numerical modality (numerical features 160) provides additional statistical features. Through the late fusion strategy, the model advantageously integrates the features extracted from both modalities to achieve more accurate predictions.

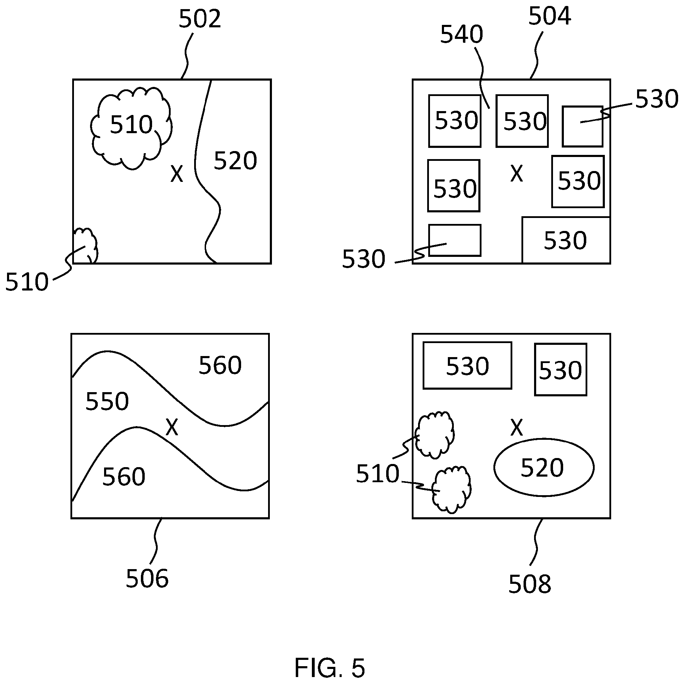

Figure 5 shows examples of satellite or aerial images 156 according to examples disclosed herein, which can each be input into the model 100.

According to examples disclosed herein any off ground or remotely sensed image can be used to determine the environmental features 162 which are used as the image modality when fusing the features. According to some examples, the images show a plan view or substantially plan view of the area captured by the image. It is envisaged that the model 100 can be used with images which are not in plan view. There is no limit on the size of image that is used, however to provide the most efficient model, the size of image should be selected so that it is possible to capture multiple environmental features in the same image.

Figure 5 illustrates images 502, 504, 506, 508, which can all either be satellite images 156, aerial images 156 or other off ground/remotely sensed images.

The images 502, 504, 506, 508, illustrate different environmental features which can be categorised and recognised by the trained image classifier 120. In particular, as shown in Figure 5, the environment features can comprise one or more of: topography 550, 560 of the area; vegetation 510 present in the area; buildings 530 present in the area; bodies of water 520 present in the area. Other environmental features for being recognised and categorised and inputting as environmental features to determine user throughput predictions are envisaged, providing they can be recognised by the image classifier 120.

Each image 502, 504, 506, 508 shows an "X" in the centre of the image, which represents the location of the user throughput target location 154. According to examples disclosed herein, the images can be obtained from a larger database given the geographical coordinates of the user throughput target location 154. The image obtained may provide the user throughput target location 154 at the centre of the image, and the area captured by the image is of a predetermined size, which is determined by the size of the images which were used to train the model 100. According to examples disclosed herein, the images 502, 504, 506, 508 have the same resolution. According to examples disclosed herein, the satellite images or the aerial images are digitally zoomed from one or more larger images, and are at the same level of digital zoom when they are input into the model 100. According to examples disclosed herein, the user throughput target location 154 may not be located at the centre of the image and the images may contain more than one user throughput target location 154.

The geographical location of user throughput target locations 154 and the geographical area shown in the aerial images or the satellite images can be linked by geographical location data which is linked to the satellite images or aerial images. Application Programmable Interfaces (APIs) associated with satellite images or aerial images can be used to integrate the satellite images 156 or aerial images 156 with the user throughput target locations 154. For example, Google Cloud Platform (GCP) is a suite of cloud computing services provided by Google which provides satellite image maps. To download the corresponding satellite image of specific location, the user throughput target locations 154 can be combined with the satellite map provider in the satellite map API. The satellite maps API can be used to download the satellite images for all geographical locations where the user throughput target locations 154 are. According to an example, for each user throughput target location 154, using the Google Cloud Platform, a zoom level 19 and image size 640 x 640 can be used which gives a resolution of 0.298 metres per pixel.

The output of the image classifier 120 can for example be a vector indicating the probability of certain environmental features in different categories being present in the image. For example image 502 shows vegetation 510 and a body of water 520, and the image 508 shows vegetation 510, a body of water 520 and buildings 530. The images 502, 508 show a similar level of vegetation 510 and so the probability determined by the image classifier 120 of vegetation being present an image may be somewhat equivalent. In image 502, the body of water 520 is much larger than the body of water 520 shown in 508 and so the probability determined by the image classifier 120 may be higher for a body of water being present in image 502 than that shown in image 508. In image 508 buildings 530 are present whereas no buildings are present in image 502. The image classifier 120 may therefore determine that image 508 has a high probability of buildings 530 being present in the image whereas the image 502 may be determined to have a very low or even zero probability of buildings 530 being present. In image 504, only buildings 530 and streets 540 are present. The image 504 may therefore be determined to show a very high probability of buildings 530 being present and the image classifier 120 may also be trained to recognise streets 540.

Image 506 shows the base 550 of a valley and two sides 560 of the valley, which indicate the topography present in the area of the image 506. The image classifier may therefore determine that there is a high probability of a valley being present in image 506. The image classifier 120 can be configured through training to recognise other topographical features such as plains, mountains, hills, cliffs, etc.

According to examples disclosed herein, the trained image classifier 120 comprises a convolutional neural network. In other examples the trained image classifier can comprise other architectures such as ensemble learning, transfer learning, graph neural networks, amongst others.

According to examples, the convolutional neural network uses an AlexNet architecture. According to examples, the trained image classifier 120, such as an AlexNet architecture, is pre-trained and is fine tuned on satellite images 156 or aerial images 156 to extract features that are relevant to the model 100, such as the presence of buildings 530, vegetation 510, water bodies 520 or other topographical features 550, 560.

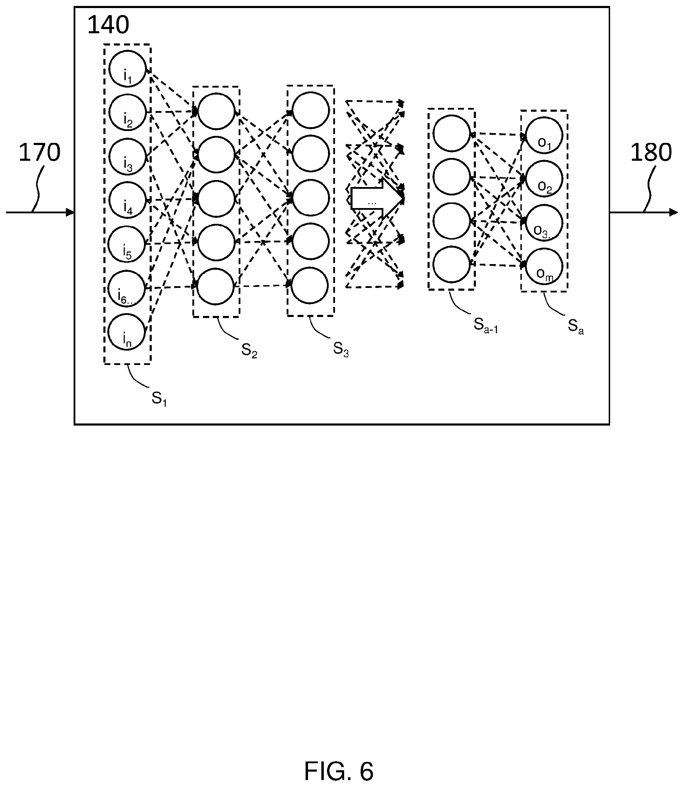

According to examples disclosed herein, the trained user throughput predictor module 140 comprises a feed forward neural network. Figure 6 illustrates an example trained user throughput predictor module 140 comprising a feed-forward neural network according to examples disclosed herein.

As shown in Figure 6, fused features 170 are provided to the trained user throughput predictor module 140, and the trained user throughput predictor module 140 provides user throughput predictions 180 for each of the one or more serving base stations 320 at the user throughput target location 154.

Feed-forward neural networks are machine learning models that employ multiple layers of nonlinear units (known as artificial "neurons") to generate an output from an input. Feed-forward neural networks learn through training to produce the optimum output using a labelled dataset to train on.

Feed-forward neural networks can be composed of several layers $S_1$, $S_2$, $S_3$,... $S_{a-1}$, $S_a$. Each layer $S_{1...a}$ is formed from nodes known as artificial neurons, the nodes being represented in Figure 6 by a circle in the layers $S_{1...a}$. In the feed-forward neural network, the input layer $S_1$ has input nodes $i_{1...n}$ for receiving an input vector $I_n = \{I_1, I_2,...., I_n\}$. In examples according to the present disclosure, the input vector can comprise the fused features 170.

As illustrated in Figure 6, each node in successive layers receives a signal value from one or more nodes in the preceding layers, processes them according to some nonlinear function, and then passes output signal values to one or more nodes in the subsequent layers, much like neurons and synapses in a biological brain. Different layers may perform different transformations and functions, and may have an increased, or decreased, number of nodes, compared to the preceding layer. The one or more hidden layers $S_{2...a-1}$ after the input layer $S_1$, provide their output to output nodes $o_{1...m}$ of the output layer $S_a$ of the neural network. The one or more hidden layers therefore have connecting nodes which connect the input layer to the output layer. The connections of the connecting nodes having weights.

The output nodes of the output layer output an output vector $O_m = \{O_1, O_2,...., O_m\}$. Each value in the output vector can comprise a prediction of a user throughput for a particular serving base station 320. According to examples disclosed herein, as the different user throughput target locations may have a different number of serving base stations, the size of the output vector may be variable. Alternatively, the output vector may have a fixed size which represents the maximum number of predictions it can make, and if a user throughput target location 154 has less serving base stations then this maximum number, then values of the output vector will be zero or otherwise indicate that a prediction is not made for that value of the output vector.

As described herein the numerical features extractor 114 can also comprise a feedforward neural network. In this example, the input vector takes the values of the numerical data 113, the network KPIs 150 and the user throughput target location 154 and the output vector contains the numerical features 160 which are generated as a result of the self-learned patterns by the feed-forward neural network during training.

According to examples described herein, both the trained numerical feature extractor 114 and the user throughput predictor module 140 comprise feed-forward neural networks. In other examples other machine learning algorithms are used, such as other neural network architectures.

According to examples described herein, computer program instructions are provided for using a trained multimodal machine learning model 100 to predict user throughput in a telecommunications network. The computer program instructions, when executed by one or more processor(s), cause the processor(s) to: obtain a satellite image 156 or an aerial image 156 of an area; provide the satellite image 156 or aerial image 156 to a trained image classifier module 120 of the trained multimodal machine learning model 100, wherein the trained image classifier 120 is configured through training to recognise and categorise environmental features present in the satellite image 156 or aerial image 156; obtain recognised and categorised environmental features 162 from the satellite image 156 or aerial image 156 at the output of the trained image classifier 120; obtain network KPIs 150 relating to a telecommunications network which at least partially covers the area; obtain base station configuration data 152 associated with at least one base station and associated with the telecommunications network, provide the network KPIs 150, the base station configuration data 152, a user throughput target location 154 within the area, to a numerical data module 110 of the trained multimodal machine learning model 100; determine, using the numerical data module 110, numerical data 113 comprising: the network KPIs 150; the user throughput target location 154; each distance between the geographical location of the user throughput target location 154 and the geographical location of one or more serving base stations 320 of the at least one base station; each path loss estimate, using a path loss model, between the geographical location of the user throughput target location 154 and the geographical location of the one or more serving base stations 320; each bearing angle between a transmitter of the one or more serving base stations 320 and the at least one user throughput target location 154; wherein each of the one or more serving base stations 320 is a base station which is configured to serve the geographical location of the user throughput target location 154; input the numerical data 113 into a trained numerical data feature extractor 114; obtain numerical features 160 at the output of the trained numerical data feature extractor 114; provide the numerical features 160 and the environmental features 162 to a fusion module 130 of the trained multimodal machine learning model 100; fuse the numerical features 160 and the environmental features 162 using the fusion module 130 to create fused features 170; provide the fused features 170 as input to a trained user throughput predictor module 140 of the trained multimodal machine learning model 100, wherein the trained user throughput predictor module 140 is configured, through training, to provide user throughput predictions; obtain, at the output of the trained user throughput predictor module 140, a user throughput prediction 180 for each of the one or more serving base stations 320 at the user throughput target location 154.

According to examples disclosed herein, a computer readable medium storing user throughput predictions 180 associated with multiple user throughput target locations 154 is provided. According to examples, the user throughput predictions 180 for the multiple user throughput target locations 154 have been obtained using a multimodal machine learning model 100 as described herein, for example using a method 200 as described herein. The user throughput predictions for each different user throughput target location may be stored as an output vector output vector $O_m$ on the computer readable medium. Each output vector output vector $O_m$ may contain one or more user throughput predictions 180 for each user throughput target location 154. Each user throughput prediction 180 in an output vector $O_m$ may represent a user throughput prediction 180 from a different serving base station 320 for that user throughput target location 154.

Method 200 in Figures 1 and 2 illustrate the model 100 whilst it is operating in online mode, which enables dynamic estimation of user throughput values 180 in any location 154. In the training mode of the model 100, the same architecture is used with the exception that the user throughput target location 154 is replaced by locations of user throughput measurements which have been taken to form part of numerical training data.

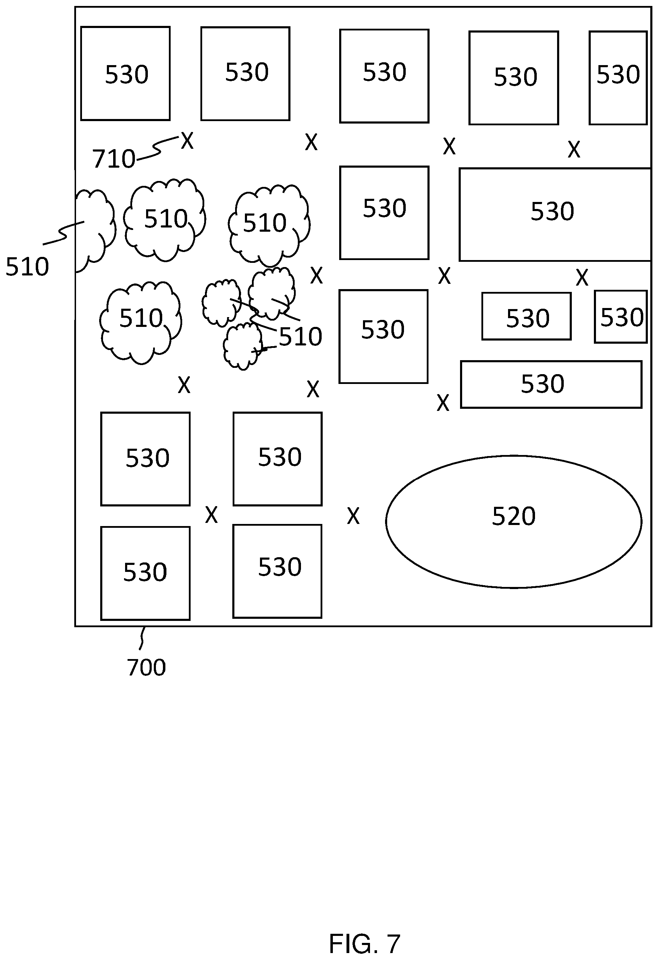

Figure 7 illustrates an example map 700 showing locations at which user throughput measurements 710 have been made for the purposes of collecting data for use as part of numerical training data. Each "X" represents a location at which a user throughput measurement 710 was made on a user equipment device. In Figure 7, only one "X" is labelled for readability.

As shown in Figure 7, in this example, the area surrounding the locations at which the user throughput measurements 710 were made contained different environmental features, for example vegetation 510, a body of water 520 and buildings 530.

According to examples disclosed herein, the user throughput measurements 710 and the associated locations are collected using RF drive testing, where a user equipment device, such as a smart phone is used to collect data logs which are either uploaded or saved periodically for further post-analysis. Commercial user equipment can be used to fully simulate a real customer's experience. RF drive testing is an effective way to automate the collection of different user throughput measurements 710 at different geographical locations which can then be later linked to satellite images for training. According to an example, a vehicle in which the RF drive testing takes place was set to an average road speed of 35 km/h, with a sample interval of 20 milliseconds. The user equipment device was locked in a particular network for example 4G network using B1 band 2100 MHz. A built-in GPS module of the user equipment device can be used for accurate coordinate synchronisation. An example data set which was collected spanned 10 km$^2$ with a 30 km driving distance covered by 28 different physical cell identifiers, which identify a cell in the physical layer. The download physical downlink shared channel (DL PDSCH) Phy throughput obtained is used as the user throughput measurement for the purposes of training.

It is to be understood therefore that the locations of user throughput measurements 710 shown in Figure 7 may only represent some of the user throughput measurements taken in this area 700. Additionally, the user throughput measurements 710 can be collected by other methods besides RF drive testing. For example on foot measurements may be taken where vehicles cannot access, or other sources of collected user throughput measurements 710.

The RF drive testing data can be a training set of RF drive testing data, wherein the RF drive testing data comprises user throughput measurements taken at multiple locations, wherein each user throughput measurement is recorded together with its location.

In order to train the multimodal machine learning model 100 to use both the modalities of image features and numerical features to create a more accurate user throughput prediction, satellite images or aerial images corresponding to the locations of the user throughput measurements are obtained for use as a training set of satellite images or a training set of aerial images. Each satellite image or aerial image is linked to a corresponding user throughput measurement and its location. For example the location of a user throughput measurement may be at the centre of the corresponding satellite image or aerial image. As described herein, APIs can be used to obtain the geographical location of the satellite image of the aerial image, so that it can be linked to the geographical location of the user throughput measurements.

As will be appreciated by the high sampling rate provided in examples of the RF drive testing data described herein, in some examples only a subset of the user throughput measurements and their associated locations are used as the training set of data in order to avoid repetition of network conditions and geographical locations represented in the satellite images.

Each satellite image or each aerial image from the training set of satellite images or the training set of aerial images is the same size according to examples described herein. Additionally according to examples disclosed herein, each of the images in the training set of satellite images or alternatively each of the training set of aerial images have the same amount of digital zoom from one or more larger images. For example the imagery provided by a maps provider may provide images of a wide area, and from this the training set of images can be obtained which are sub-images of the original images provided originally by the maps provider.

According to examples, the area 700 is larger than the images obtained for the training set of aerial images or the training set of satellite images, with each location of the user throughput measurements 710 being linked to an obtained image which is smaller in area than the area 700. In other examples, images of the same size as area 700 may be used in which measurements were made, and model 100 can be trained to provide predictions for several user throughput locations at the same time.

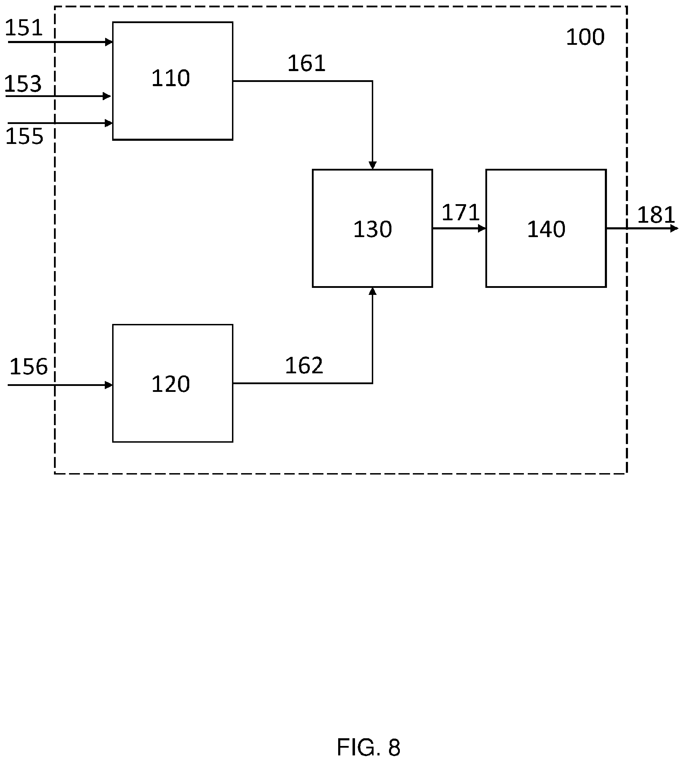

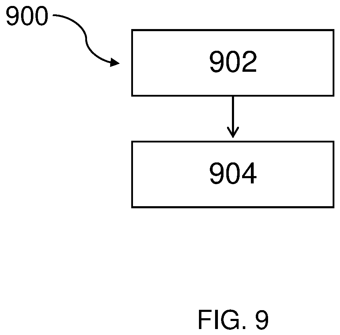

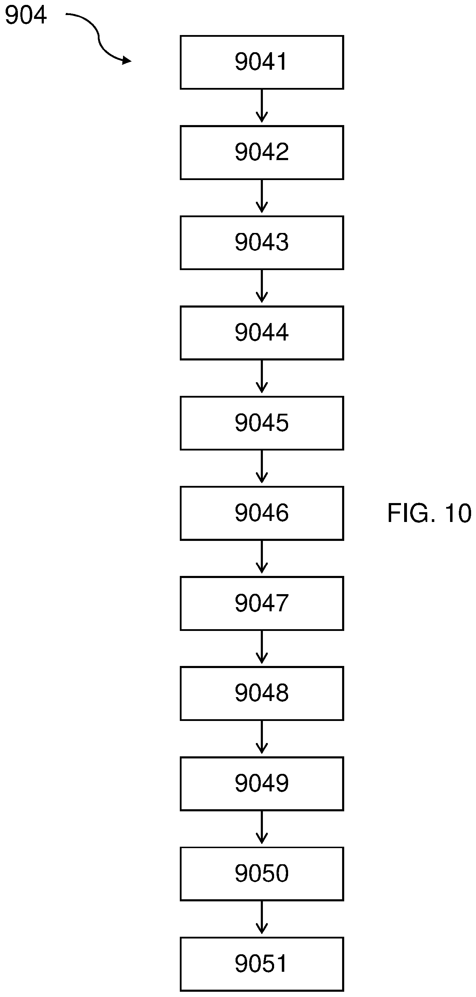

Figure 8 shows a schematic of a multimodal machine learning model 100 in a training mode according to examples disclosed herein. Figures 9 and 10 show methods 900 of training a multimodal machine learning model 100 according to examples disclosed herein.

As shown in Figure 9, the method 900 comprises: receiving 902 a set of training images and a set of numerical training data. The set of training images each comprise an image of a different area, and comprise either a set of satellite images or a set of aerial images. The set of numerical data comprises, for each area: network KPIs 151 relating to one or more telecommunications networks which at least partially covers the area; base station configuration data 153 associated with at least one base station and associated with the telecommunications network; a geographical location 155 of a user throughput measurement.

The method 900 further comprises: training 904 at least a numerical data feature extractor 114 of a numerical data module 110 of the multimodal machine learning model 100 and a user throughput predictor module 140 of the multimodal machine learning model 100, using the set of training images and the set of numerical training data.

Figure 10 shows an example of what the training comprises. In particular according to examples described herein, the training comprises: inputting 9041 a one 156 of the set of training images into an image classifier 120 of the multimodal machine learning model 100, the image classifier 120 being configured to recognise and categorise environmental features present in the satellite image 156 or aerial image 156; obtaining 9042 recognised and categorised environmental features 162 from the image 156 at the output of the image classifier 120. Figure 8 shows the image 156 being input into the image classifier 120 and the recognised and categorised environmental features 162 being obtained from the output of the image classifier 120.

The training further comprises: inputting 9043 the numerical training data corresponding to the image 156 into the numerical data module 110 of the multimodal machine learning model; determining 9044, using the numerical data module 110, numerical data comprising: the network KPIs 151; the geographical location 155 of the user throughput measurement 710; a distance between the geographical location 155 of the user throughput measurement 710 and the geographical location of a serving base station 320 of the at least one base station; a path loss estimate, using a path loss model, between the geographical location 155 of the user throughput measurement 710 and the geographical location of the serving base station 320; a bearing angle between a transmitter of the serving base station 320 and the geographical location 155 of the user throughput measurement 710.

The serving base station 320 is a base station which is configured to serve the geographical location 155 of the user throughput measurement 710.

The training further comprises: inputting 9045 the numerical data into a numerical data feature extractor 114 of the multimodal machine learning model 100; obtaining 9046 predicted numerical features 161 at the output of the numerical data feature extractor 114.

Figure 8 shows the KPIs 151, the base station configuration data 153 and the location 155 of the geographical user throughput measurement 710, which are the numerical training data corresponding to the image 156, being fed to the module 110 and obtaining the predicted numerical features 161 of the output.

The training further comprises: fusing 9047 the recognised and categorised environmental features 162 and the predicted numerical features 161 in a fusion module 130 of the multimodal machine learning model 100 to create predicted fused features 171; inputting 9048 the predicted fused features 171 into a user throughput predictor module 140 of the multimodal machine learning model 100; obtaining 9049 a predicted user throughput 181 at an output of the user throughput predictor module 140. Figure 8 shows the predicted numerical features 161 and the recognised and categorised environmental features 162 being fed to the fusion module 130, obtaining the predicted fused features 171 and inputting the predicted fused features 171 into the user throughput predictor module 140 and obtaining the predicted user throughput 181 at the output.

The training further comprises determining 9050 an objective function characterising an error between the predicted user throughput 181 compared to the associated user throughput measurement 710; using 9051 an appropriate optimisation algorithm operating on the objective function, updating at least the numerical data feature extractor 114 and the throughput predictor module 140 to seek to minimise the objective function. For example gradient descent can be used to seek to minimise the objective function or any other appropriate optimisation algorithm.

According to examples described herein, the user throughput measurement 710 and its associated geographical location 155 is part of a RF drive testing data set. In other examples, other methods besides RF drive testing can be used to collect the user throughput measurements at different locations, for example on foot measurements.

According to examples described herein, the numerical data feature extractor 114 comprises a feed-forward neural network, and the user throughput predictor module 140 comprises a feed-forward neural network. Other machine learning algorithms can be used in other examples, for example other neural network architectures.

According to examples described herein, the image classifier 120 is pretrained to recognise and categorise environmental features present in the satellite image 156 or aerial image 156. For example the image classifier 120 may be a convolutional neural network such as an AlexNet architecture which has been pre-trained to recognise and categorise environmental features. It was considered during the devising of this invention that using a pre-trained image classifier was the most efficient way to train the multimodal machine learning model 100. In other examples the image classifier 120 is trained at the same time as the numerical data feature extractor 114 and the user throughput predictor module 140 through back propagation techniques or any other appropriate training method. Therefore according to some examples the method comprises updating the image classifier 120 as well as the numerical data feature extractor 114 and the user throughput predictor module 140 to seek to minimise the objective function. According to examples, in the computer implemented method 900 of training a multimodal machine learning model, the training comprises training the image classifier 120 as well as the numerical data feature extractor 114 of a numerical data module 110 of the multimodal machine learning model 100 and a user throughput predictor module 140 of the multimodal machine learning model 100, using the set of training images.

According to examples disclosed herein, the base station configuration data 153 comprises, for each of the at least one base station: operating frequency of the base station, transmitted power of the base station, at least one antenna height of the base station and the geographical location of the base station.

It is to be understood that Figures 9 and 10 illustrate one forward propagation pass and one back propagation pass of the training of the model 100. The steps of the training can be repeated as often as possible using subsequent images and the associated numerical training data as often as possible.

According to an example of training a model 100 described herein, over 100,000 user throughput measurements were recorded and for each user throughput value the corresponding satellite map image was obtained using a satellite map API. These images were resized to 160 x 160 x 3 (3 is for each of the colour channels RGB). The final model was trained with a batch size of 128, a learning rate of 0.001 and employed the Adam optimiser with the root mean squared error as the cost function. The training dataset was split into training and validation sets, with 20% of the data allocated to validation. The model 100 underwent 15 hours of training to achieve optimal accuracy, using mean absolute error as the primary performance metric. This extensive training process resulted in a precise model 100 capable of predicting user throughput values 181 given satellite images 156, network KPIs 150, base station configuration data 152 and the user throughput target location 154. The model 100 achieved a mean average error of 3.113 megabits per second and an $R^2$ score of 0.975.

The method 900 shows predicting a user throughput using one serving base station. As described herein, multiple base stations may serve a particular user throughput location. Therefore as part of the training, training can comprise repeating the training steps using a different serving base station 320 to obtain a user throughput prediction for a particular user throughput location. In some scenarios, this can be used to effectively determine which base station was used at the time of the user throughput measurement, as in some scenarios it will correlate most clearly with the user throughput predicted.

According to examples disclosed herein, there is provided computer program instructions provided for training a multimodal machine learning model 100 to predict user throughput in a telecommunications network. The computer program instructions, when executed by one or more processor(s), cause the processor(s) to: receive a set of training images and a set of numerical training data, the set of training images each comprise an image 156 of a different area, and comprise either a set of satellite images or a set of aerial images. The set of numerical data comprises, for each area: network KPIs 151 relating to one or more telecommunications networks which at least partially covers the area; base station configuration data 153 associated with at least one base station and associated with the telecommunications network; a geographical location 155 of a user throughput measurement. The computer program instructions, when executed by one or more processor(s), further cause the processor(s) to train at least a numerical data feature extractor 114 of a numerical data module 110 of the multimodal machine learning model 100 and a user throughput predictor module 140 of the multimodal machine learning model 100, using the set of training images and the set of numerical training data. The training comprises: inputting a one 156 of the set of training images into an image classifier 120 of the multimodal machine learning model 100, the image classifier 110 being configured to recognise and categorise environmental features present in the satellite image or aerial image; obtaining recognised and categorised environmental features 162 from the image 156 at the output of the image classifier 120; inputting the numerical training data corresponding to the image 156 into the numerical data module 110 of the multimodal machine learning model 100; determining, using the numerical data module, numerical data comprising: the network KPIs 151; the geographical location 155 of the user throughput measurement 710; a distance between the geographical location 155 of the user throughput measurement 710 and the geographical location of a serving base station 320 of the at least one base station; a path loss estimate, using a path loss model, between the geographical location 155 of the user throughput measurement 710 and the geographical location of the serving base station; a bearing angle between a transmitter of the serving base station and the geographical location 155 of the user throughput measurement 710.

The serving base station is a base station which is configured to serve the geographical location 155 of the user throughput measurement.

The training further comprises: inputting the numerical data into a numerical data feature extractor 114 of the multimodal machine learning model 100; obtaining predicted numerical features 161 at the output of the numerical data feature extractor 114.

The training further comprises: fusing the recognised and categorised environmental features 162 and the predicted numerical features 161 in a fusion module 130 of the multimodal machine learning model 100 to create predicted fused features 171; inputting the predicted fused features 171 into a user throughput predictor module 140 of the multimodal machine learning model 100; obtaining a predicted user throughput 181 at an output of the user throughput predictor module 140.

The training further comprises determining an objective function characterising an error between the predicted user throughput 181 compared to the associated user throughput measurement; using an appropriate optimisation algorithm operating on the objective function, updating at least the numerical data feature extractor 114 and the throughput predictor module 140 to seek to minimise the objective function. For example gradient descent can be used to seek to minimise the objective function or any other appropriate optimisation algorithm.

As described herein, according to examples, the path loss model can comprise the Hata-Okumara model. A correction factor is applied depending on whether the environment for which path loss is to be determined is urban, suburban or rural. This can be accounted for in several ways during the training process of the model 100 and its operation during online mode. For example, the image classifier may be trained or tuned to output a category of which environment the satellite image or aerial image is in. The category of the environment can then be provided to the numerical data module 110 for use when calculating the path loss as part of the numerical data.

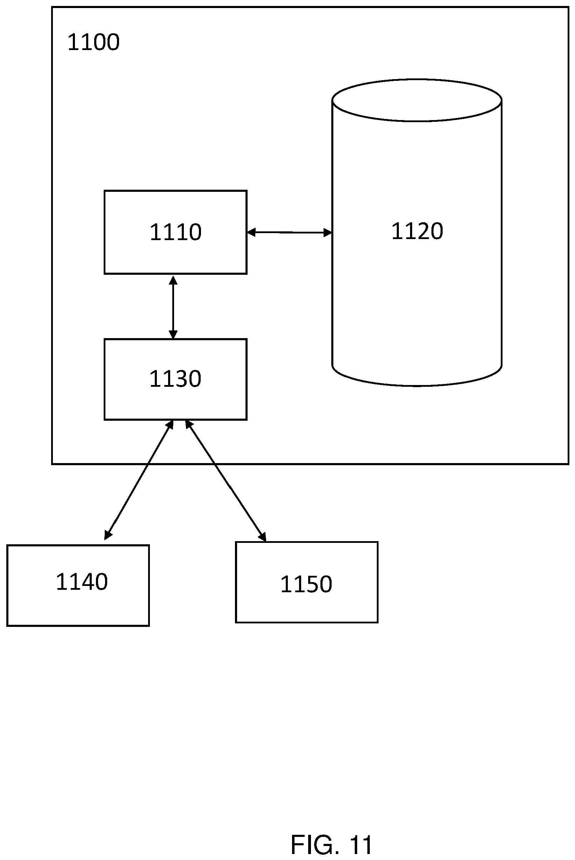

Figure 11 illustrates an example system 1100 according to examples disclosed herein. The system 1100 comprises: one or more processors 1110; memory 1120 storing a trained multimodal machine learning model 100; wherein the multimodal machine learning model 100 is for predicting user throughput in a telecommunications network 1140, wherein the multimodal machine learning model 100 comprises: a trained image classifier 120; a numerical data module 110; a fusion module 130; a user throughput predictor module 140. The memory 1120 comprises instructions which, when executed by one or more of the processors 1110, cause the processor(s) to: obtain a satellite image 156 or an aerial image 156 of an area; provide the satellite image 156 or aerial image 156 to the trained image classifier module 120 of the trained multimodal machine learning model 100, wherein the trained image classifier 120 is configured through training to recognise and categorise environmental features present in the satellite image 156 or aerial image 156; obtain recognised and categorised environmental features 162 from the satellite image 156 or aerial image 156 at the output of the trained image classifier 120; obtain network KPIs 150 relating to a telecommunications network 1140 which at least partially covers the area;

obtain base station configuration data 152 associated with at least one base station and associated with the telecommunications network 1140; provide the network KPIs 150, the base station configuration data 152, a user throughput target location 154 within the area, to a numerical data module 110 of the trained multimodal machine learning model 100; determine, using the numerical data module 110, numerical data comprising: the network KPIs 150; the user throughput target location 154; each distance between the geographical location of the user throughput target location 154 and the geographical location of one or more serving base stations 320 of the at least one base station; each path loss estimate, using a path loss model, between the geographical location 154 of the user throughput target location and the geographical location of the one or more serving base stations 320; each bearing angle between a transmitter of the one or more serving base stations 320 and the at least one user throughput target location 154; wherein each of the one or more serving base stations is a base station which is configured to serve the geographical location 154 of the user throughput target location;

input the numerical data into a trained numerical data feature extractor 114; obtain numerical features 160 at the output of the trained numerical data feature extractor 114; provide the numerical features 160 and the environmental features 162 to the fusion module 130 of the trained multimodal machine learning model 100; fuse the numerical features 160 and the environmental features 162 using the fusion module 130 to create fused features 170; provide the fused features 170 as input to a trained user throughput predictor module 140 of the trained multimodal machine learning model 100, wherein the trained user throughput predictor module 140 is configured, through training, to provide user throughput predictions; obtain, at the output of the trained user throughput predictor module 140 , a user throughput prediction 180 for each of the one or more serving base stations at the user throughput target location.

As shown in Figure 11, the system 1100 can comprise an input-output interface 1130 which can be used to communicate with the telecommunications network 1140 as well as provide user throughput predictions to a separate user device 1150. For example the separate user device 150 may be used by an engineer wishing to obtain a user throughput prediction. The user throughput prediction model 100 may also be controlled by the separate user equipment 1150 via the input output interface 1130. The input output interface 1130 may also connect with other devices and services. In some examples the memory can be separate from the one or more processors 1110 and memory 1120.

According to examples disclosed herein, a system is provided for training a multimodal machine learning model 100 to predict user throughput in a telecommunications network. The system comprises: one or more processors; memory storing a multimodal machine learning model 100; wherein the multimodal machine learning model 100 is for predicting user throughput in a telecommunications network, wherein the multimodal machine learning model 100 comprises: an image classifier 120; a numerical data module 110; a fusion module 130; a user throughput predictor module 140. The memory comprises instructions which, when executed by one or more of the processors, cause the processor(s) to: receive a set of training images and a set of numerical training data;
wherein the set of training images each comprise an image of a different area, and comprise either a set of satellite images or a set of aerial images; wherein the set of numerical data comprises, for each area: network KPIs 151 relating to one or more telecommunications networks 1140 which at least partially covers the area; base station configuration data 153 associated with at least one base station and associated with the telecommunications network 1140, a geographical location 155 of a user throughput measurement 710. The instructions which, when executed by one or more of the processors, further cause the processor(s) to: train at least a numerical data feature extractor 114 of a numerical data module 110 of the multimodal machine learning model 100 and a user throughput predictor module 140 of the multimodal machine learning model 100, using the set of training images and the set of numerical training data.

The training of the multimodal machine learning model 100 in the system can comprise: inputting a one 156 of the set of training images into an image classifier 120 of the multimodal machine learning model 100, the image classifier 120 being configured to recognise and categorise environmental features 162 present in the satellite image or aerial image. The training further can comprise: obtaining recognised and categorised environmental features 162 from the image 156 at the output of the image classifier 120; inputting the numerical training data corresponding to the image 156 into the numerical data module of the multimodal machine learning model; determining, using the numerical data module, numerical data comprising: the network KPIs 151; the geographical location 155 of the user throughput measurement 710; a distance between the geographical location 155 of the user throughput measurement 710 and the geographical location of a serving base station 320 of the at least one base station; a path loss estimate, using a path loss model, between the geographical location 155 of the user throughput measurement 710 and the geographical location of the serving base station; a bearing angle between a transmitter of the serving base station 320 and the geographical location of the user throughput measurement 710. The serving base station 320 is a base station which is configured to serve the geographical location of the user throughput measurement.
The training can further comprise inputting the numerical data into a numerical data feature extractor 114 of the multimodal machine learning model; obtaining predicted numerical features 161 at the output of the numerical data feature extractor 114; fusing the recognised and categorised environmental features 162 and the predicted numerical features 161 in a fusion module 130 of the multimodal machine learning model 100 to create predicted fused features 171.

The training can further comprise: inputting the predicted fused features 171 into a user throughput predictor module 140 of the multimodal machine learning model 100; obtaining a predicted user throughput 181 at an output of the user throughput predictor module 140; determining an objective function characterising an error between the predicted user throughput 181 compared to the user throughput measurement 710; using an appropriate optimisation algorithm operating on the objective function, updating at least the numerical data feature extractor 114 and the user throughput predictor module 140 to seek to minimise the objective function.

According to examples disclosed herein, the telecommunications network 1140 is one of a 3G, LTE and 5G network.

According to examples disclosed herein, there is provided a data store comprising a trained multimodal machine learning model 100 according to examples described herein which can be used to perform methods 200 described herein. According examples disclosed herein, there is provided a data store comprising a multimodal machine learning model 100 according to examples described herein, which can be trained, for example, according to methods 900 described herein.

Throughout the description and claims of this specification, the words "comprise" and "contain" and variations of them mean "including but not limited to", and they are not intended to (and do not) exclude other components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, or characteristics described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

It will be appreciated that various changes and modifications can be made to the present invention without departing from the scope of the present application.


**Claims**

1.    A computer implemented method of predicting user throughput in a telecommunications network, comprising:

> obtaining a satellite image or an aerial image of an area;
> providing the satellite image or aerial image to a trained image classifier module of a trained multimodal machine learning model, wherein the trained image classifier is configured through training to recognise and categorise environmental features present in the satellite image or aerial image;
> obtaining recognised and categorised environmental features from the satellite image or aerial image at the output of the trained image classifier;
> obtaining network Key Performance Indicators (KPIs) relating to a telecommunications network which at least partially covers the area;
> obtaining base station configuration data associated with at least one base station and associated with the telecommunications network,
> providing the network KPIs, the base station configuration data, a user throughput target location within the area, to a numerical data module of the trained multimodal machine learning model;
> determining, using the numerical data module, numerical data comprising: the network KPIs; the user throughput target location; each distance between the geographical location of the user throughput target location and the geographical location of one or more serving base stations of the at least one base station; each path loss estimate, using a path loss model, between the geographical location of the user throughput target location and the geographical location of the one or more serving base stations; each bearing angle between a transmitter of the one or more serving base stations and the at least one user throughput target location;
> wherein each of the one or more serving base stations is a base station which is configured to serve the geographical location of the user throughput target location;
> inputting the numerical data into a trained numerical data feature extractor;
> obtaining numerical features at the output of the trained numerical data feature extractor;
> providing the numerical features and the environmental features to a fusion module of the trained multimodal machine learning model;
> fusing the numerical features and the environmental features using the fusion module to create fused features;
> providing the fused features as input to a trained user throughput predictor module of the trained multimodal machine learning model, wherein the trained user throughput predictor module is configured, through training, to provide user throughput predictions;
> obtaining, at the output of the trained user throughput predictor module, a user throughput prediction for each of the one or more serving base stations at the user throughput target location.

2.    A computer implemented method as claimed in claim 1, wherein the base station configuration data comprises, for each of the at least one base station: operating frequency of the base station, transmitted power of the base station, at least one antenna height of the base station and the geographical location of the base station.

3.    A computer implemented method as claimed in any preceding claim, wherein the fusing of the numerical features and the environmental features comprises concatenating the numerical features and the environmental features.

4. A computer implemented method as claimed in any preceding claim, wherein the KPIs comprise one or more of:

call drop rate;
call setup success rate;
data transfer success rate;
cell throughput;
number of active users;
cell resources utilisation;
Physical Resource Block Download utilisation;
average number of users per cell;
Control Channel Elements Utilization; and
one or more KPIs which indicate network load in the telecommunications network.

5. A computer implemented method as claimed in any preceding claim, wherein the environmental features comprise one or more of:

topography of the area;
vegetation present in the area;
buildings present in the area;
bodies of water present in the area.

6. A computer implemented method as claimed in any preceding claim, wherein the trained image classifier comprises a convolutional neural network; and/or wherein the telecommunications network is one of a 3G, LTE and 5G network.

7. A computer implemented method as claimed in any preceding claim, wherein the satellite image, or alternatively, the aerial image, has linked geographical location data for the area and/or is a digitally zoomed image from a larger image; and/or
wherein the user throughput target location is at the centre of the area.

8. A computer implemented method as claimed in any preceding claim, wherein:

the path loss model comprises a Hata-Okumura model; and/or
the trained numerical data feature extractor comprises a feed-forward neural network; and/or
the trained user throughput predictor module comprises a feed-forward neural network.

9. A computer implemented method as claimed in any preceding claim, wherein the trained multimodal machine learning model has been trained using a training set of RF drive testing data, wherein the RF drive testing data comprises user throughput measurements taken at multiple locations, wherein each user throughput measurement is recorded together with its geographical location,
wherein optionally the trained multimodal machine learning model is trained using a training set of images, wherein the images are either satellite images or aerial images, wherein each image in the training set of images is linked to a corresponding user throughput measurement and the geographical location of the user throughput measurement.

10. A computer implemented method as claimed in claim 9, wherein each image of the training set of images are the same size and/or each of the training set of images have the same amount of digital zoom from one or more larger images.

11. A computer implemented method of training a multimodal machine learning model to predict user throughput in a telecommunications network, comprising:

receiving a set of training images and a set of numerical training data;
wherein the set of training images each comprise an image of a different area, and comprise either a set of satellite images or a set of aerial images;
wherein the set of numerical data comprises, for each area: network KPIs relating to one or more telecommunications networks which at least partially covers the area; base station configuration data associated with at least one base station and associated with the telecommunications network, a geographical location of a user throughput measurement;
training at least a numerical data feature extractor of a numerical data module of the multimodal machine learning model and a user throughput predictor module of the multimodal machine learning model, using the set of training images and the set of numerical training data.

12. A computer implemented method of training a multimodal machine learning model as claimed in claim 11, wherein the training comprises:

inputting a one of the set of training images into an image classifier of the multimodal machine learning model, the image classifier being configured to recognise and categorise environmental features present in the satellite image or aerial image;

obtaining recognised and categorised environmental features from the image at the output of the image classifier;

inputting the numerical training data corresponding to the image into the numerical data module of the multimodal machine learning model;

determining, using the numerical data module, numerical data comprising: the network KPIs; the geographical location of the user throughput measurement; a distance between the geographical location of the user throughput measurement and the geographical location of a serving base station of the at least one base station; a path loss estimate, using a path loss model, between the geographical location of the user throughput measurement and the geographical location of the serving base station; a bearing angle between a transmitter of the serving base station and the geographical location of the user throughput measurement;

wherein the serving base station is a base station which is configured to serve the geographical location of the user throughput measurement;

inputting the numerical data into the numerical data feature extractor of the multimodal machine learning model;

obtaining predicted numerical features at the output of the numerical data feature extractor;

fusing the recognised and categorised environmental features and the predicted numerical features in a fusion module of the multimodal machine learning model to create predicted fused features;

inputting the predicted fused features into the user throughput predictor module of the multimodal machine learning model;

obtaining a predicted user throughput at an output of the user throughput predictor module;

determining an objective function characterising an error between the predicted user throughput compared to the user throughput measurement;

using an appropriate optimisation algorithm operating on the objective function, updating at least the numerical data feature extractor and the user throughput predictor module to seek to minimise the objective function.

13. A computer implemented method of training a multimodal machine learning model as claimed in claim 11 or 12, wherein the user throughput measurement and its associated geographical location are part of a RF drive testing data set; and/or

wherein the numerical data feature extractor comprises a feed-forward neural network, wherein the user throughput predictor module comprises a feed-forward neural network; and/or

wherein the image classifier is pretrained to recognise and categorise environmental features present in the image.

14. A computer implemented method of training a multimodal machine learning model as claimed in any of claims 11 to 13, wherein the base station configuration data comprises, for each of the at least one base station: operating frequency of the base station, transmitted power of the base station, at least one antenna height of the base station and the geographical location of the base station.

15. A system comprising:

one or more processors;

memory storing a multimodal machine learning model;

wherein the trained multimodal machine learning model is for predicting user throughput in a telecommunications network, wherein the multimodal machine learning model comprises:

a trained image classifier;

a numerical data module;

a fusion module;

a user throughput predictor module;

wherein the memory comprises instructions which, when executed by one or more of the processors, cause the processor(s) to:

obtain a satellite image or an aerial image of an area;

provide the satellite image or aerial image to the trained image classifier module of the trained multimodal machine learning model, wherein the trained image classifier is configured through training to recognise and categorise environmental features present in the satellite image or aerial image;

obtain recognised and categorised environmental features from the satellite image or aerial image at the output of the trained image classifier;

obtain network KPIs relating to a telecommunications network which at least partially covers the area;

obtain base station configuration data associated with at least one base station and associated with the telecommunications network,

provide the network KPIs, the base station configuration data, a user throughput target location within the area, to the numerical data module of the trained multimodal machine learning model;

determine, using the numerical data module, numerical data comprising: the network KPIs; the user throughput target location; each distance between the geographical location of the user throughput target location and the geographical location of one or more serving base stations of the at least one base station; each path loss estimate, using a path loss model, between the geographical location of the user throughput target location and the geographical location of the one or more serving base stations; each bearing angle between a transmitter of the one or more serving base stations and the at least one user throughput target location;

wherein each of the one or more serving base stations is a base station which is configured to serve the geographical location of the user throughput target location;

input the numerical data into the trained numerical data feature extractor;

obtain numerical features at the output of the trained numerical data feature extractor;

provide the numerical features and the environmental features to the fusion module of the trained multimodal machine learning model;

fuse the numerical features and the environmental features using the fusion module to create fused features;

provide the fused features as input to the trained user throughput predictor module of the trained multimodal machine learning model, wherein the trained user throughput predictor module is configured, through training, to provide user throughput predictions;

obtain, at the output of the trained user throughput predictor module, a user throughput prediction for each of the one or more serving base stations at the user throughput target location.

FIG. 1

200

202

↓

204

↓

206

↓

208

↓

210

↓

212

↓

214

↓

216

↓

218

↓

220

↓

222

↓

224

↓

226

FIG. 2

FIG. 3

FIG. 4

FIG. 5

FIG. 6

FIG. 7

FIG. 8

FIG. 9

904

```
┌──────────┐
│   9041   │
└────┬─────┘
     ↓
┌──────────┐
│   9042   │
└────┬─────┘
     ↓
┌──────────┐
│   9043   │
└────┬─────┘
     ↓
┌──────────┐
│   9044   │
└────┬─────┘
     ↓
┌──────────┐
│   9045   │
└────┬─────┘
     ↓
┌──────────┐
│   9046   │
└────┬─────┘
     ↓
┌──────────┐
│   9047   │
└────┬─────┘
     ↓
┌──────────┐
│   9048   │
└────┬─────┘
     ↓
┌──────────┐
│   9049   │
└────┬─────┘
     ↓
┌──────────┐
│   9050   │
└────┬─────┘
     ↓
┌──────────┐
│   9051   │
└──────────┘
```

FIG. 10

FIG. 11

Europäisches
Patentamt

European
Patent Office

Office européen
des brevets

# EUROPEAN SEARCH REPORT

**Application Number**

EP 25 17 6330

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/074189 A1 (ERICSSON TELEFON AB L M [SE]) 11 April 2024 (2024-04-11) | 11 | INV. H04L41/16 H04L43/0888 H04W24/06 |
| A | * paragraph [0006] - paragraph [0081]; claims; figures * | 1-10, 12-15 | |
| A | ----- US 11 729 636 B1 (AHMED SYED UMAIR [US] ET AL) 15 August 2023 (2023-08-15) * column 4, line 7 - column 12, line 31; claims; figures * ----- | 1-15 | |

**TECHNICAL FIELDS SEARCHED (IPC)**

H04L
H04W

The present search report has been drawn up for all claims

| Place of search | Date of completion of the search | Examiner |
|---|---|---|
| Munich | 14 October 2025 | Ceccarini, Giulio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 6330

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2025

| Patent document cited in search report | Publication date | Patent family member(s) | Publication date |
|---|---|---|---|
| WO 2024074189 A1 | 11-04-2024 | NONE | |
| US 11729636 B1 | 15-08-2023 | NONE | |

EPO FORM P0459

For more details about this annex : see Official Journal of the European Patent Office, No. 12/82